# EUROPEAN PATENT APPLICATION

(11) **EP 4 345 548 A1**
(43) Date of publication of application: **03.04.2024**
(21) Application number: 23187403.3
(22) Date of filing: 25.07.2023
(51) Int. Cl.: G05B 19/042

(54) **SAFETY I/O MODULE WITH MULTI-CHANNEL HIGH SIDE SWITCH**

(30) Priority: 27.09.2022 US 202217953957
(71) Applicant: Rockwell Automation Asia Pacific Business center Pte. Ltd., Singapore 618494 (SG)
(72) Inventor: Zhang, Rain Jilin, Singapore, SG (SG); Shah, Rajesh Ramesh, Singapore, SG (SG); Raheem, Syed Sajid, Singapore, SG (SG)
(74) Representative: Grünecker Patent- und Rechtsanwälte PartG mbB

(57) **Abstract**

A safety I/O module includes a plurality of output channels and a plurality of channel output terminals. The safety module further includes a multi-channel high side switch comprising an integrated circuit including a voltage input terminal and a plurality of main switches. A plurality of discrete safety switches are also provided. Each of the output channels includes a redundant pair of switches including one of the main switches of the multi-channel high side switch and one of the safety switches arranged in series. The main switch and the safety switch are configured to: (i) operably connect the voltage input terminal of the multi-channel high side switch to a respective one of the channel output terminals when both the main switch and the safety switch are in a conductive state; and (ii) disconnect the voltage input terminal of the multi-channel high side switch from the respective one of the channel output terminals when at least one of the main switch and the safety switch are in a non-conductive state. A method of operating a safety I/O module includes operating a plurality of main switches of a high side multi-channel switch integrated circuit to selectively conduct a supply voltage from a voltage input terminal to at least one discrete safety switch and operating the safety switch to selectively conduct the supply voltage to a respective one of the channel output terminals.

## Description

### BACKGROUND INFORMATION

The present disclosure relates to industrial control systems and, more particularly, to safety input/output (I/O) modules for use in such control systems to protect human life and health. The present disclosure also relates to a method of operating such a safety I/O module.

Industrial controllers are special purpose computers used in controlling industrial systems such as machines and/or processes. Under the direction of a stored program, an industrial controller examines a series of inputs reflecting the status of the controlled system and changes a series of outputs that are provided to the controlled system. The inputs and outputs may be digital/binary, ("on" or "off') or analog so as to provide a value that can vary within a substantially continuous range. The inputs may be obtained from sensors, switches, and other input devices attached to or otherwise associated with the controlled system and the outputs may be provided to actuators, motors, valves, contactors, and other output devices associated with the controlled system. As noted above, the term "system" can mean a device or machine or group of devices or machines, a process or series of processes, or a combination of one or more devices, machines, and/or processes. Furthermore, the term "I/O module" can refer to a module used only for input, used only for output, or used for a combination of input and output.

Safety systems are systems intended to emphasize the safety of humans working in the environment of the controlled system. Such safety systems may include the electronics associated with emergency stop (E-Stop) buttons, light curtains, brakes, lockouts, contactors, and/or other machine safety features. A safety system must continue to operate correctly and predictably under failure or emergency conditions. In some cases, safety systems have been implemented by a set of redundant circuits separate from the industrial control system used to control the system with which the safety system is associated. Such safety systems have been hardwired from switches and relays, including specialized safety relays which provide comparison of redundant signals and internal checking of all conditions, such as welded or stuck contacts. In other cases, safety control can be implemented through the industrial control system, itself, using redundant processors, diagnostics, and other components and techniques to meet safety standards that minimize failures and that seek to ensure that if a failure occurs, the controlled system is stopped or otherwise rendered safe in a predictable and safe manner.

An industrial control system can include both standard industrial control devices and also safety control devices. The safety control devices include safety input/output (I/O) modules that receive safety-related input from the controlled system on one or more safety input channels and communicate same to the control processor (controller) and/or that communicate safety-related output from the controller to the control led system via one or more safety output channels. Such safety I/O modules can include only safety inputs, only safety outputs, or a combination of safety inputs and safety outputs. In some cases, these I/O modules have implemented safety output channels that have required redundant switches that increase the cost, increase the required printed circuit board space, and increase assembly complexity in a manner that has been deemed to be inefficient for certain applications where space on the printed circuit board(s) and/or space in a housing is limited and/or in situations where reducing cost is desired.

### BRIEF DESCRIPTION

In accordance with one aspect of the present development, a safety I/O module includes a plurality of output channels and a plurality of channel output terminals connected respectively to said plurality of output channels. The safety I/O module further includes a multi-channel high side switch comprising an integrated circuit including a voltage input terminal and a plurality of main switches integrated into a single chip. A plurality of individual safety switches are also provided. Each of the output channels includes a redundant pair of switches including one of the main switches of the multi-channel high side switch and one of the safety switches arranged in series with respect to each other. For each of the output channels, the main switch and the safety switch are configured to: (i) operably connect the voltage input terminal of the multi-channel high side switch to a respective one of the channel output terminals when both the main switch and the safety switch are in a conductive state; and (ii) disconnect the voltage input terminal of the multi-channel high side switch from the respective one of the channel output terminals when at least one of the main switch and the safety switch are in a non-conductive state.

In accordance with another aspect of the present disclosure, a method of operating a safety I/O module includes providing a safety I/O module including a multi-channel high side integrated circuit switch including a plurality of main switches that each include a main switch input and a main switch output. The method further includes providing a plurality of individual discrete semiconductor safety switches that each include a safety switch input terminal connected to the main switch output of one of the main switches and that each include a safety switch output terminal connected to a channel output terminal. The plurality of main switches are operated to selectively conduct a supply voltage from a voltage input terminal of the multi-channel high side switch to at least one of the main switch outputs, and the plurality of discrete safety switches are operated to selectively conduct the supply voltage from a respective one of the main switch outputs to a respective one of the channel output terminals.

### BRIEF DESCRIPTION OF THE DRAWINGS

FIG. 1 (prior art) illustrates one example of a known industrial control system implementing a safety control system.
FIG. 2 (prior art) illustrates one example of a known safety I/O module.
FIG. 3 illustrates a safety I/O module including a multi-channel high side switch provided and operated in accordance with an embodiment of the present disclosure.

### DETAILED DESCRIPTION

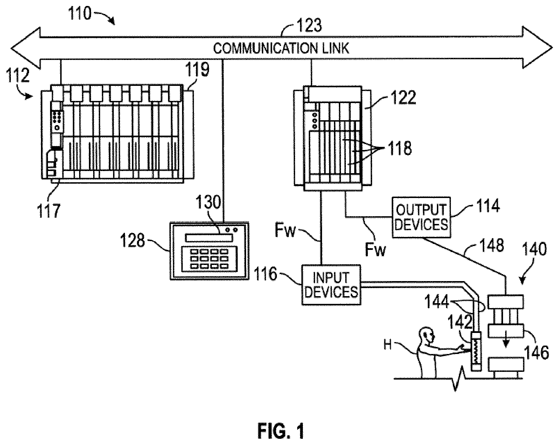

FIG. 1 illustrates one example of a known industrial control system 110 for controlling a controlled system 140 which is shown herein as a safety system that must be controlled in a safe manner to minimize the risk of human life and health. It should be noted that the industrial control system 110 and controlled system 140 are merely examples and that other industrial control systems and controlled systems 140 are contemplated as part of the present disclosure. The terms "system" and "controlled system" can mean any device or machine or group of devices or machines, a process or a series of processes, or a combination of one or more devices, machines, and/or processes.

The industrial control system 110 comprises a programmable control system or "controller" 112 that controls the output status of one or a plurality of output devices 114 based on the input status of one or a plurality of input devices 116. To this end, the controller 112 includes a microprocessor-based processor or processor module 117 that executes a stored control program that defines the manner in which the output devices 114 are controlled based upon input received from the input devices 116.

The processor module 117 communicates with the input and output devices 116,114 through one or more input/output modules or "I/O modules" 118. The input and output devices 116,114 are each operably connected to an I/O module 118 using field wiring FW connected to the I/O module input or output channels directly or through a terminal block. The processor module 117 transmits a digital representation of the desired operational status of an output device 114 to the I/O module 118 connected to the particular output device 114. Based on the digital representation of the desired operational status of the output device 114, the I/O module 118 produces an output control signal that is capable of driving or controlling the output device 114 in the desired manner as instructed by the processor modulel 17. Likewise, the processor module 117 receives a digital representation of the operational status of an input device 116 from the I/O module 118 that is connected to the particular input device 116. The I/O module 118 produces a digital data representation of the operational status of the input device 116 based on input status signals received from the input device 116 and communicates the digital data representation to the processor module 117. Those of ordinary skill in the art will recognize that the term "I/O module" is a general term that refers to input modules that receive input from one or more of the input devices 116, output modules that provide output to one or more of the output devices 114, and combined input and output modules that both receive input from one or more of the input devices 116 and also provide output to one or more of the output devices 114. As such, an "I/O module" is configured and functions to perform at least one of: (i) receiving input from one or more of the input devices 116; (ii) providing output to one or more of the output devices 114. Furthermore, in some cases, an I/O module can be specified as an "input module" that receives input from the input device(s) 116 without providing output to the output device(s) 114, or as an "output module" that provides output to the output device(s) 114 without receiving input from the input device(s) 116. Accordingly, some of the I/O modules 118 can be input modules, output modules, or a combined input and output module.

In the illustrated embodiment, the processor module 117 is disposed in a first or controller installation 119 which can be a first cabinet, rack, chassis, and/or modular assembly and the I/O module 118 is disposed in a separate second or I/O installation 122 which can be a second cabinet, rack, chassis, or modular assembly that can be adjacent the controller installation 119 or remote from the controller installation 119 (as shown). Communication between the processor module 117 and the I/O module(s) 118 occurs by way of a wired or wireless network or other communication link 123 such as an industrial ethernet network or another network. The industrial control system 110 also comprises other features such as an operator interface 128 and a message display 130. The operator interface 128 and message display 130 facilitate human interaction with the industrial control system 110.

Of course, numerous other arrangements are possible. For example, one or more I/O modules 118 could additionally or alternatively be located and installed as part of the controller installation 119 together with the processor module 117. In one embodiment, the controller installation 119 and the I/O installation 122 are combined such that all of the components thereof are located in the same cabinet, chassis, rack, modular assembly, or other installation.

In the present example, the controlled system 140 includes a controlled safety machine and/or process that utilizes a safety input device such as a light curtain 142 providing redundant light curtain signals 144 to a safety I/O module 118 and a controlled machine 146 such as a motor, press, or other machine or system that receives control commands and electrical power from one or more of the controlled output devices 114. In one example, the output devices 114 include a main contactor that can be set to interrupt electrical power to the press 146 when an I/O module 118 changes the voltage on a DC output channel from an energized or "high" voltage state to a deenergized or "low" voltage state in response to input received from the light curtain 142 that indicates that a human operator H (or another person/object) has interrupted or crossed the light curtain 142.

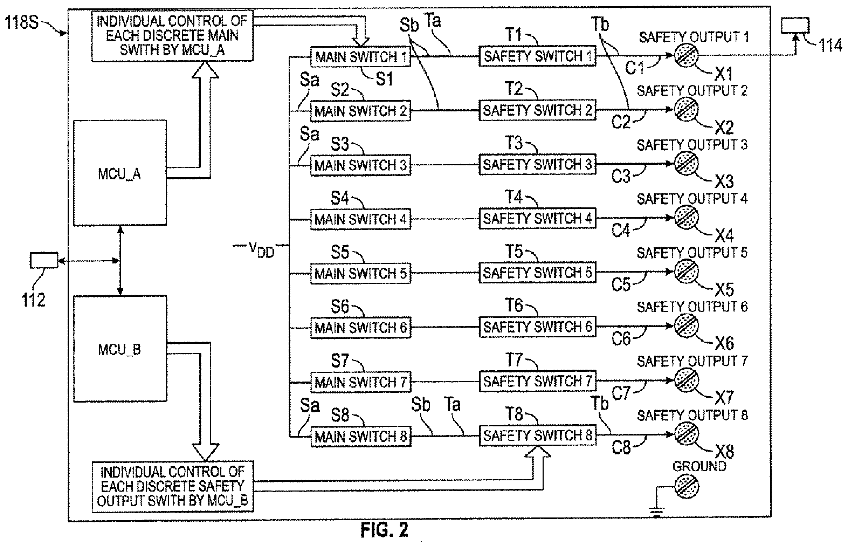

FIG. 2 shows a known safety I/O module 118 (more specifically designated as 118S) configured as an output module including a plurality (eight in the present example) of output channels C1 - C8, but the module 118S can alternatively also include one or more input channels to provide both input and output functions. The safety I/O module 118S can be operated as one of the I/O modules 118 of the control system 110 of FIG. 1. The output channels C1 - C8 comprise respective main switches S1 - S8 (each generally a main switch "S") and also comprise respective safety switches T1 - T8 (each generally a safety switch "T") that are respectively connected in series with the main switches S1 - S8 such that each output channel C1 - C8 includes a redundant pair of switches including a main switch S1 - S8 and a respective safety switch T1 - T8.

Each output channel C1 - C8 further includes a respective channel output terminal X1 - X8 (each generally a channel output terminal X) connected in series with the main and safety switches S1 - S8, T1 - T8. The channel output terminals X1 - X8 can each be connected to an output device 114, directly or through a terminal block, such that the output device 114 is operably connected to the output channel C1 - C8 to receive an output control signal therefrom. Each main switch S and each safety switch T is an individual or discrete semiconductor switch device installed on a printed circuit board. In the illustrated example, each main switch S includes a main switch input terminal Sa operably connected to an electrical input voltage source such as a DC source V_{DD}. Each main switch S also includes a main switch output terminal Sb. Each safety switch T includes a safety switch input terminal Ta connected to a respective main switch output terminal Sb. Each safety switch T also includes a safety switch output terminal Tb operably connected to a respective channel output terminal X. For each output channel C1 - C8, the relative positions of the main switch S and safety switch T can be reversed. For each channel C1 - C8, when both its main switch S and safety switch T are in a conductive state or "closed" the voltage source V_{DD} is present at the respective channel output terminal X1 - X8 to provide a "high" output signal. Conversely, for each output channel C1 - C8, the voltage source V_{DD} is absent from or disconnected from the respective channel output terminal X1 - X8 when at least one of the main switch S and safety switch T are in a non-conductive or "opened" state to provide a "low" output signal. In this sense, the main switch S and safety switch T provide redundant switching for each channel C1 - C8 to ensure that a "low" voltage output signal can be provided at the respective output terminal X1 - X8 as required to place one or more output devices 114 in a safe state even if one of the main switch S or safety switch T fails in the conductive or closed state.

The safety I/O module 118S also comprises first and second microprocessor-based safety I/O processors MCU_A, MCU_B operably connected to the control system controller 112 so that the redundant safety I/O processors MCU_A, MCU_B provide input to and receive output from the processing module 117 of the controller 112. The first and second I/O processors MCU_A, MCU_B can provide redundant processing of data received from and/or transmitted to the processor module 117 of the controller 112 of the control system 110. In one example, the first safety processor MCU_A is operably connected to and individually controls the conductive state of each discrete main switch S1 - S8, while the second safety processor MCU_B is operably connected to and individually controls the conductive state of each discrete safety switch T1 - T8.

As noted above, while a known safety I/O module as shown in FIG. 2 provides satisfactory results, in certain circumstances it has been deemed desirable to reduce the number of components to reduce cost, reduce the amount of required printed circuit board and housing space, and to simplify assembly overall.

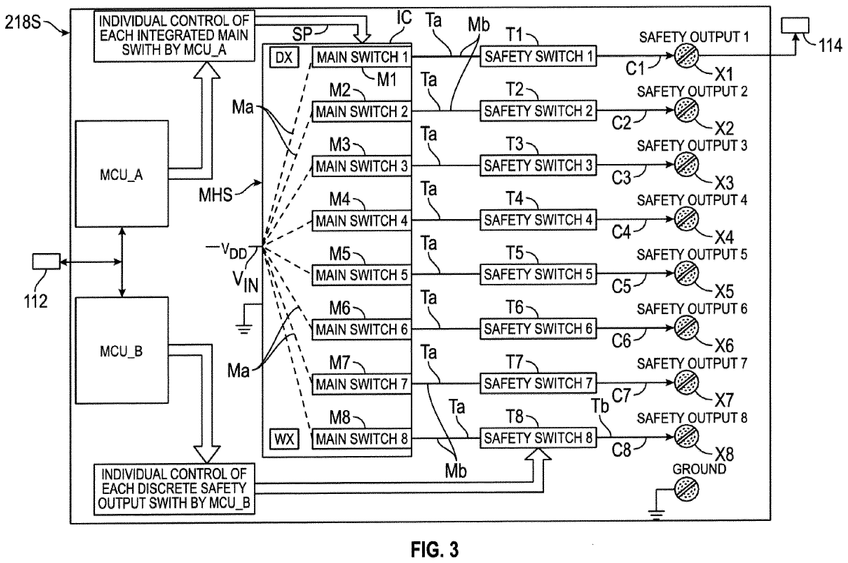

FIG. 3 illustrates a safety I/O module 218S provided in accordance with an embodiment of the present development that can be used as an I/O module 118 in the control system 110 of FIG. 1. In particular, a safety I/O module 218S provided in accordance with an embodiment of the present development can be used in place of the safety I/O module 118S as part of the control system 110, e.g., as part of the I/O installation 122 or elsewhere to provide output signals to one or more output devices 114 and optionally also receive input signals from one or more input devices 116. Like components of the safety I/O module 218S relative to the safety I/O module 118S are identified with like reference identifiers and are not necessarily described again.

The safety I/O module 218S shown in FIG. 3 is configured as an output module including a plurality (eight in the present example) of output channels C1 - C8, but the module 218S can alternatively also include one or more input channels to provide both input and output functions. The output channels C1 - C8 comprise respective safety switches T1 - T8 (each generally a safety switch T) that are respectively connected in series with the channel output terminals X1 - X8 (each generally an output terminal X). Similar to the safety I/O module 118S, the channel output terminals X1 - X8 of the safety I/O module 218S can each be connected to an output device 114, directly or through a terminal block, such that the output device 114 is operably connected to the output channel C1 - C8 to receive an output control signal therefrom. Each safety switch T is provided as an individual or discrete semiconductor switch device installed on a printed circuit board. Unlike the safety I/O module 118S, the safety I/O module 218S further comprises an integrated circuit chip IC configured as a multi-channel high side switch MHS connected operably between the DC voltage source V_{DD} and each of the safety switches T1 - T8. More particularly, the multi-channel high side switch MHS comprises a voltage input terminal V_{IN} operably connected to the voltage source V_{DD}. The integrated circuit IC of the multi-channel high side switch MHS further comprises multiple (eight in the present example) integrated semiconductor main switches M1 - M8 (each switch generally an integrated main switch M) each having an input Ma operably connected to the voltage input terminal V_{IN}. Each integrated main switch M1 - M8 further comprises an output Mb connected in series with an input terminal Ta of a respective one of the safety switches T1 - T8 through a respective output pin of the multi-channel high side switch chip IC. Each main switch input Ma and a main switch output Mb are operably electrically connected when said main switch M is in a conductive state and each main switch input Ma and a main switch output Mb are electrically disconnected when the main switch M is in a non-conductive state. As noted above, the output terminal Tb of each safety switch T is connected to a respective channel output terminal X. Each safety switch input terminal Ta the corresponding safety switch output terminal Tb are electrically connected when the safety switch T is in a conductive state and each safety switch input terminal Ta and the corresponding safety switch output terminal Tb are electrically disconnected when the safety switch T is in a non-conductive state.

As such, each output channel C1 - C8 of the safety output module 218S includes a pair of semiconductor switches M,T arranged in series, with a high side integrated main switch M that is part of an integrated circuit chip MHS connected in series with a respective individual or discrete safety switch '1'. The multi-channel high side switch MHS is located operably between the voltage source V_{DD} and the respective safety T switch as is required due to the single voltage input terminal V_{IN} of the multi-channel high side switch chip IC, i.e., the high side switch MHS must be upstream or on the high side relative to the individual safety switches T in order to provide an output Mb for each discrete safety switch T1 - T 8. For each output channel C1 - C8, when both its integrated main switch M and its safety switch T are in a conductive state or "closed" the voltage input terminal V_{IN} and voltage source V_{DD} are connected to the respective channel output terminal X1 - X8 to provide a "high" output voltage signal at the respective channel output terminal X. Conversely, for each output channel C1 - C8, the voltage input terminal V_{IN} and the voltage source V_{DD} are disconnected from the respective channel output terminal X1 - X8 when at least one of the integrated main switch M and safety switch T are in a non-conductive or "opened" state to provide a "low" voltage output signal at the respective channel output terminal X1 - X8. For each output channel C, the integrated main switch M and safety switch T thus provide redundant switching to ensure that a "low" voltage output signal can be provided at the respective channel output terminal X as required to place one or more of the output devices 114 in a safe state even if one of the integrated main switch M or safety switch T fails in the conductive state or is erroneously controlled to be in the conductive state. Accordingly, the present disclosure provides a safety I/O module 218S and a method of operating same including a high side integrated main switch M that is part of an integrated circuit chip IC connected in series with a respective individual or discrete safety switch T, wherein the integrated main switch M and safety switch T provide redundant switching to ensure that a "low" voltage output signal can be provided at the respective channel output terminal X as required to place one or more of the output devices 114 in a safe state even if one of the integrated main switch M or the discrete safety switch T fails in the conductive state or is erroneously controlled to be in the conductive state.

The safety I/O module 218S also comprises first and second microprocessor-based safety I/O processors MCU_A, MCU_B operably connected to the controller 112 of the overall control system 110 so that the redundant safety I/O processors MCU_A, MCU_B provide input to and receive output from the processing module 117 of the controller 112. The first and second safety I/O processors MCU_A, MCU_B can provide redundant processing of data received from and/or transmitted to the processor module 117 of the controller 112 of the control system 110. In one example, the first safety processor MCU_A is operably connected to the multi-channel high side switch MHS through a serial or parallel connection SP and individually controls the conductive state of each integrated main switch M1 - M8, while the second safety processor MCU_B is operably connected to and individually controls the conductive state of each safety switch T1 - T8.

In the safety I/O module 218S, the integrated single chip multi-channel high side switch MHS reduces the printed circuit board space and therefore also the internal housing space required as compared to a conventional safety I/O module 118S by providing multiple main switches M integrated onto a single chip package IC while still providing for redundant switching for each individual output channel C1 - C8 as required for a safety I/O module. Furthermore, the integrated circuit multi-channel high side switch MHS can include a diagnostics module DX that detects faults such as an output short fault that indicates a short between the voltage input terminal V_{IN} and any main switch output Mb, a low supply voltage fault that indicates a low supply voltage (i.e., V_{DD} below a select value), a temperature fault that indicates high chip temperature conditions (i.e., temperature of integrated circuit chip IC above a selective value), and/or other faults. If the diagnostics module DX detects a fault, it can control each main switch M (all of the main switched M) to be set to the non-conductive "off" state so that the output devices 114 will receive a low voltage output signal and be placed in a safe state. Also, the integrated circuit multi-channel high side switch MHS can further include a watchdog module WX that monitors control input from the first safety processor MCU_A and automatically sets the state of all of the integrated main switches M to the non-conductive "off' state so that the output devices 114 will receive a low voltage output signal to place the connected output devices 114 in the safe state if control input from the first safety processor MCU_A is absent for a select timeout period such as a timeout period in the range of 200 to 1200 milliseconds (ms) as can be configured by a user for a particular application.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

**The following is a list of further preferred embodiments of the invention:**
Embodiment 1: A safety I/O module comprising:
   a plurality of output channels;
   a plurality of channel output terminals connected respectively to said plurality of output channels;
   a multi-channel high side switch comprising an integrated circuit including a voltage input terminal and a plurality of main switches integrated into a single chip;
   a plurality of individual safety switches;
   each of said output channels comprising a redundant pair of switches including one of said main switches of said multi-channel high side switch and one of said safety switches arranged in series with respect to each other, wherein, for each of said output channels, said main switch and said safety switch are configured to: (i) operably connect the voltage input terminal of said multi-channel high side switch to a respective one of the channel output terminals when both said main switch and said safety switch are in a conductive state; and (ii) disconnect the voltage input terminal of said multi-channel high side switch from the respective one of the channel output terminals when at least one of said main switch and said safety switch are in a non-conductive state.
Embodiment 2: The safety I/O module as set forth in embodiment 1, wherein said multi-channel high side switch selectively operably connects said voltage input terminal of said multi-channel high side switch to one or more of said safety switches when one or more of said main switches of said multi-channel high side switch is in a conductive state.
Embodiment 3: The safety I/O module as set forth in embodiment 2, wherein:
   each main switch of said multi-channel high side switch comprises a main switch input and a main switch output that are conductively connected when said main switch is in a conductive state;
   each of said safety switches comprises a safety switch input terminal and a safety switch output terminal that are conductively connected when said safety switch is in a conductive state, wherein each safety switch output terminal is connected to a respective one of said channel output terminals and each safety switch input terminal is connected to said main switch output of one of the main switches.
Embodiment 4: The safety I/O module as set forth in embodiment 3, further comprising:
   first and second microprocessor-based safety I/O processors that control the conductive state of the main switches and the safety switches.
Embodiment 5: The safety I/O module as set forth in embodiment 4, wherein the first and second safety I/O processors individually control the conductive state of each of the main switches and each of the safety switches.
Embodiment 6: The safety I/O module as set forth in embodiment 5, wherein:
   said first safety I/O processor is operably connected to the multi-channel high side switch and individually controls the conductive state of each of said main switches; and,
   said second safety I/O processor is operably connected to each of the safety switches and individually controls the conductive state of each of said safety switches.
Embodiment 7: The safety I/O module as set forth in embodiment 6, wherein said multi-channel high side switch further comprises a diagnostics module as part of said single chip that monitors the operative state of said multi-channel high side switch.
Embodiment 8: The safety I/O module as set forth in embodiment 7, wherein said diagnostics module monitors at least one of: a short circuit fault that indicates a short circuit between said voltage input terminal and any of said main switch outputs; a voltage input fault that indicates that voltage at said voltage input terminal is below a select value; a temperature fault that indicates that a temperature of said multi-channel high side switch above a selective value.
Embodiment 9: The safety I/O module as set forth in embodiment 8, wherein said diagnostics module sets all of said main switches to be in a non-conductive state if said diagnostics module detects at least one of said short circuit fault, said voltage input fault, said temperature fault.
Embodiment 10: The safety I/O module as set forth in embodiment 9, wherein said multi-channel high side switch further comprises a watchdog module as part of said single chip.
Embodiment 11: The safety I/O module as set forth in embodiment 10, wherein said watchdog module monitors control input from the first safety I/O processor and sets all of the main switches to said non-conductive state if control input from the first safety I/O processor is absent for a select timeout period.
Embodiment 12: The safety I/O module as set forth in embodiment 11, wherein said select timeout period is configurable by a user and is in the range of 200 to 1200 milliseconds (ms).
Embodiment 13: The safety I/O module as set forth in embodiment 6, wherein said multi-channel high side switch further comprises a watchdog module as part of said single chip.
Embodiment 14: The safety I/O module as set forth in embodiment 13, wherein said watchdog module monitors control input from the first safety I/O processor and sets all of the main switches to said non-conductive state if control input from the first safety I/O processor is absent for a select timeout period.
Embodiment 15: The safety I/O module as set forth in embodiment 1, wherein said safety I/O module comprises eight output channels.
Embodiment 16: A method of operating a safety I/O module comprising:
   providing a safety I/O module including a multi-channel high side integrated circuit switch comprising a plurality of main switches that each include a main switch input and a main switch output;
   providing a plurality of individual discrete semiconductor safety switches that each include a safety switch input terminal connected to the main switch output of one of the main switches and that each include a safety switch output terminal connected to a channel output terminal;
   operating the plurality of main switches to selectively conduct a supply voltage from a voltage input terminal of said multi-channel high side switch to at least one of said main switch outputs;
   operating the plurality of discrete safety switches to selectively conduct the supply voltage from a respective one of the main switch outputs to a respective one of the channel output terminals.
Embodiment 17: The method as set forth in embodiment 16, wherein:
   said step of operating said plurality of main switches is performed by a first safety microprocessor; and,
   said step of operating said plurality of safety switches is performed by a second safety microprocessor.
Embodiment 18: The method as set fort in embodiment 16, further comprising using a diagnostics module of said multi-channel high side integrated circuit switch to monitor for the presence of at least one fault associated with said multi-channel high side integrated circuit switch and setting all of said plurality of main switches to a non-conductive state when a fault is detected.
Embodiment 19: The method as set forth in embodiment 18, further comprising using a watchdog module of said multi-channel high side integrated circuit switch to monitor for the absence of control input from said first safety processor for more than a select period of time and setting all of said plurality of main switches to a non-conductive state if said control input from said first safety processor is absent for more than said select period of time.
Embodiment 20: The method as set forth in embodiment 19, wherein said select period of time is in the range of 200 to 1200 milliseconds (ms).

## Claims

1. A safety I/O module comprising:
a plurality of output channels;
a plurality of channel output terminals connected respectively to said plurality of output channels;
a multi-channel high side switch comprising an integrated circuit including a voltage input terminal and a plurality of main switches integrated into a single chip;
a plurality of individual safety switches;
each of said output channels comprising a redundant pair of switches including one of said main switches of said multi-channel high side switch and one of said safety switches arranged in series with respect to each other, wherein, for each of said output channels, said main switch and said safety switch are configured to: (i) operably connect the voltage input terminal of said multi-channel high side switch to a respective one of the channel output terminals when both said main switch and said safety switch are in a conductive state; and (ii) disconnect the voltage input terminal of said multi-channel high side switch from the respective one of the channel output terminals when at least one of said main switch and said safety switch are in a non-conductive state.

2. The safety I/O module as set forth in claim 1, wherein said multi-channel high side switch selectively operably connects said voltage input terminal of said multi-channel high side switch to one or more of said safety switches when one or more of said main switches of said multi-channel high side switch is in a conductive state.

3. The safety I/O module as set forth in claim 2, wherein:
each main switch of said multi-channel high side switch comprises a main switch input and a main switch output that are conductively connected when said main switch is in a conductive state;
each of said safety switches comprises a safety switch input terminal and a safety switch output terminal that are conductively connected when said safety switch is in a conductive state, wherein each safety switch output terminal is connected to a respective one of said channel output terminals and each safety switch input terminal is connected to said main switch output of one of the main switches.

4. The safety I/O module as set forth in claim 3, further comprising:
first and second microprocessor-based safety I/O processors that control the conductive state of the main switches and the safety switches.

5. The safety I/O module as set forth in claim 4, wherein the first and second safety I/O processors individually control the conductive state of each of the main switches and each of the safety switches.

6. The safety I/O module as set forth in claim 5, wherein:
said first safety I/O processor is operably connected to the multi-channel high side switch and individually controls the conductive state of each of said main switches; and,
said second safety I/O processor is operably connected to each of the safety switches and individually controls the conductive state of each of said safety switches.

7. The safety I/O module as set forth in claim 6, wherein said multi-channel high side switch further comprises a diagnostics module as part of said single chip that monitors the operative state of said multi-channel high side switch.

8. The safety I/O module as set forth in claim 7, wherein said diagnostics module monitors at least one of: a short circuit fault that indicates a short circuit between said voltage input terminal and any of said main switch outputs; a voltage input fault that indicates that voltage at said voltage input terminal is below a select value; a temperature fault that indicates that a temperature of said multi-channel high side switch above a selective value.

9. The safety I/O module as set forth in claim 8, wherein said diagnostics module sets all of said main switches to be in a non-conductive state if said diagnostics module detects at least one of said short circuit fault, said voltage input fault, said temperature fault; and/or
wherein said multi-channel high side switch further comprises a watchdog module as part of said single chip; and/or
wherein said watchdog module monitors control input from the first safety I/O processor and sets all of the main switches to said non-conductive state if control input from the first safety I/O processor is absent for a select timeout period; and/or
wherein said select timeout period is configurable by a user and is in the range of 200 to 1200 milliseconds (ms).

10. The safety I/O module as set forth in claim 6, wherein said multi-channel high side switch further comprises a watchdog module as part of said single chip; and/or
wherein said watchdog module monitors control input from the first safety I/O processor and sets all of the main switches to said non-conductive state if control input from the first safety I/O processor is absent for a select timeout period.

11. The safety I/O module as set forth in one of claims 1 to 10, wherein said safety I/O module comprises eight output channels.

12. A method of operating a safety I/O module comprising:
providing a safety I/O module including a multi-channel high side integrated circuit switch comprising a plurality of main switches that each include a main switch input and a main switch output;
providing a plurality of individual discrete semiconductor safety switches that each include a safety switch input terminal connected to the main switch output of one of the main switches and that each include a safety switch output terminal connected to a channel output terminal;
operating the plurality of main switches to selectively conduct a supply voltage from a voltage input terminal of said multi-channel high side switch to at least one of said main switch outputs;
operating the plurality of discrete safety switches to selectively conduct the supply voltage from a respective one of the main switch outputs to a respective one of the channel output terminals.

13. The method as set forth in claim 12, wherein:
said step of operating said plurality of main switches is performed by a first safety microprocessor; and,
said step of operating said plurality of safety switches is performed by a second safety microprocessor.

14. The method as set fort in claim 12 or 13, further comprising using a diagnostics module of said multi-channel high side integrated circuit switch to monitor for the presence of at least one fault associated with said multi-channel high side integrated circuit switch and setting all of said plurality of main switches to a non-conductive state when a fault is detected.

15. The method as set forth in claim 14, further comprising using a watchdog module of said multi-channel high side integrated circuit switch to monitor for the absence of control input from said first safety processor for more than a select period of time and setting all of said plurality of main switches to a non-conductive state if said control input from said first safety processor is absent for more than said select period of time; and/or
wherein said select period of time is in the range of 200 to 1200 milliseconds (ms).
